# FASCICULE DE BREVET EUROPEEN

(11) **EP 1 247 046 B1**
(45) Date de publication et mention de la délivrance du brevet: **14.06.2006**
(21) Numéro de dépôt: 00993437.3
(22) Date de dépôt: 12.12.2000
(51) Int. Cl.: F23G 5/32, F23G 5/46, F23G 7/00

(54) **METHODE ET DISPOSITIF D'AUTO-COMBUSTION DE DECHETS ORGANIQUES GRAISSEUX COMPORTANT UN FOYER A CHAUFFE TANGENTIELLE**
VERFAHREN UND VORRICHTUNG ZUR SELBSTVERBRENNUNG VON ÖLIGEN ORGANISCHEN ABFÄLLEN MIT EINEM TANGENTIALEN HEIZOFEN
METHOD AND DEVICE FOR THE AUTOCOMBUSTION OF OILY ORGANIC WASTE, COMPRISING A TANGENTIAL HEATING FURNACE

(30) Priorité: 16.12.1999 FR 9916302
(43) Date de publication de la demande: 09.10.2002
(73) Titulaire: Lacaze S.A., 46120 Leyme (FR); Institut Français du Pétrole, 92852 Rueil-Malmaison Cedex (FR)
(72) Inventeur: FLAMENT, Patrick, F-78610 Auffargis (FR); LACAZE, Pierre, F-46120 Leyme (FR); HENDOU, Mouloud, F-46200 Bannes (FR); TEULET, Christophe, F-46500 Gramat (FR)
(86) Numéro de dépôt international: PCT/FR2000/003493
(87) Numéro de publication internationale: WO 2001/044721

(56) Documents cités:
- BE-A- 540 756
- DE-C- 974 562
- US-A- 2 707 444
- US-A- 2 725 950
- US-A- 4 089 631

## Description

La présente invention concerne le domaine de la combustion et notamment de l'auto-combustion de déchets organiques, de préférence graisseux.

Un dispositif d'auto-combustion selon le préambule de la revendication 1 est connu du brevet US 2707444 A.

Une application particulièrement intéressante de l'invention concerne l'utilisation de l'énergie de combustion dans un échangeur de chaleur, tel qu'un appareil de production d'eau chaude.

On connaît par la demande de brevet française FR-2774454 un dispositif de chauffage d'eau comprenant une chambre d'allumage ayant une entrée d'air primaire disposée sous une chambre de combustion. La chambre d'allumage est équipée d'un moyen destiné à amorcer l'auto-combustion des déchets hétérogènes, de préférence graisseux. Cependant, une telle chaudière, adaptée spécifiquement à des déchets hétérogènes, présente notamment les inconvénients d'une manipulation des déchets délicate et une régulation de la combustion aléatoires.

Les déchets organiques tels que farines de viandes ou viscères de palmipèdes posent d'énormes problèmes de combustion car une fois séchés, la teneur en matières volatiles de ces produits est trop élevée pour être brûlée directement dans un incinérateur classique (destruction de la grille du fait de températures localement élevées). Dans un foyer standard, les zones chaudes pourraient être éliminées en utilisant des déchets humides (50 % d'eau ou plus), mais la géométrie de ces foyers ne convient pas pour récupérer correctement tout le rayonnement des flammes présentes dans la chambre de combustion, pour échauffer les déchets et pour éliminer efficacement l'eau qu'ils contiennent. L'auto-combustion n'est alors plus assurée et il en résulte un arrêt de la combustion à plus ou moins brève échéance.

La présente invention présente en revanche, l'avantage de pouvoir brûler des produits humides tout en maintenant une flamme auto-entretenue. Le problème des points chauds est résolu par la présence d'eau qui compense la forte teneur en matières volatiles du combustible.

En outre, l'invention peut permettre une automatisation complète d'un ensemble industriel de combustion de déchets.

Comme il ressortira de la description qui va suivre, l'amélioration selon l'invention se situe notamment dans la constitution spécifique du four de chauffe, au niveau de l'automatisme du fonctionnement, des émissions de polluants, de la récupération d'énergie.

Ainsi, la présente invention concerne un dispositif d'auto-combustion d'un combustible comportant des matériaux organiques, végétaux ou minéraux, le dispositif comportant une chambre de combustion, au moins un moyen d'injection du combustible, au moins une admission d'air, des moyens d'évacuation des fumées chaudes. La chambre comprend une enveloppe cylindrique, les moyens d'évacuation comprennent un conduit ayant le même axe que celui de la chambre et disposé à l'intérieur de ladite chambre, et le moyen d'injection de combustible est disposé sensiblement tangentiellement à ladite enveloppe cylindrique de façon que le combustible soit animé dans la chambre d'un mouvement circulaire autour dudit conduit.

L'injection de combustible est placée dans la chambre de façon éloignée de l'orifice d'extrémité du conduit d'évacuation, et la longueur dudit conduit à l'intérieur de la chambre de combustion peut être déterminée pour obtenir un temps de transit suffisant des produits en combustion avant d'être évacués par ledit conduit.

Le dispositif peut comporter deux moyens d'injection de combustible diamétralement opposés.

Le moyen d'injection peut comprendre trois tubes concentriques pour l'injection du combustible, de l'air de pulvérisation du combustible, et de l'air pour la combustion.

Le moyen d'injection peut comprendre une buse de pulvérisation constituée d'un disque percé d'un orifice pour le passage du jet de combustible pulvérisé, la forme du disque étant telle qu'elle peut créer des turbulences pour favoriser le mélange air/combustible dans la chambre.

La chambre de combustion comporte au moins une entrée d'air secondaire qui débouche proche et au dessus de l'orifice d'extrémité du conduit d'évacuation.

L'entrée d'air secondaire peut être sensiblement tangentielle à l'enveloppe, et orientée de façon que le mouvement de l'air secondaire dans la chambre soit dans le sens contraire de celui du combustible.

Il peut y avoir deux entrées d'air secondaire opposées diamétralement.

Des moyens de préchauffage de la chambre sont disposés dans le voisinage du moyen d'injection du combustible.

Les moyens de préchauffage peuvent comporter des admissions d'air chaud provenant de brûleurs.

La chambre peut comporter dans sa partie inférieure des moyens de réception et d'évacuation des résidus ultimes de la combustion.

Le conduit d'évacuation peut coopérer avec un échangeur de chaleur, par exemple pour fournir de l'eau chaude ou de la vapeur.

Dans le dispositif, un ventilateur peut fournir l'air de combustion, un compresseur l'air de pulvérisation, et une pompe peut alimenter les moyens d'injection en combustible.

Le combustible peut être un mélange d'eau et de matières organiques, végétales, ou minérales broyées en morceaux de taille moyenne inférieure à 10 mm, et de préférence inférieure à 5 mm.

Dans le combustible, on peut ajouter au moins un additif pour stabiliser le mélange.

On peut également ajouter une quantité d'hydrocarbures pour augmenter le PCI moyen du mélange.

La matière organique du combustible peut provenir de déchets graisseux, par exemple de palmipèdes.

L'invention concerne également une méthode pour générer de l'énergie calorifique, en mettant en oeuvre le dispositif décrit ci-dessus, et dans laquelle on détermine le volume annulaire de la chambre de combustion pour optimiser la combustion en réglant le temps de transit des gaz chauds.

Selon la méthode, on peut ajuster la composition et/ou la pulvérisation du combustible pour avoir une quantité suffisante de fines gouttelettes et/ou particules pour optimiser l'auto inflammation du combustible.

Sans sortir du cadre de la présente invention, tout autre moyen d'échange de chaleur et/ou de vapeur peut coopérer avec le dispositif d'auto-combustion. La chaleur produite selon l'invention peut être utilisée pour chauffer de l'eau de la vapeur, un fluide quelconque. Tout type d'échangeur (tubulaire, à plaques ou autre) peut être utilisé. D'une manière générale, la chaleur produite par le dispositif selon l'invention, peut être utilisée dans tous procédés industriels, par exemple en thermolyse, séchage de boues industrielles ou d'épuration.

D'autres caractéristiques, détails et avantages de la présente invention apparaîtront en outre à la lecture de la description faite ci-après à titre illustratif et nullement limitatif, en référence aux figures ci-après annexées parmi lesquelles :
- La figure 1 est une coupe longitudinale d'un mode de réalisation de l'invention;
- La figure 2 est une coupe longitudinale d'un système d'injection du combustible;
- La figure 3 est une coupe du four au niveau de l'injection de combustible;
- La figure 4 est une coupe du four de chauffe au niveau des arrivées d'air secondaire;
- La figure 5 est une représentation d'ensemble d'une installation selon l'invention.

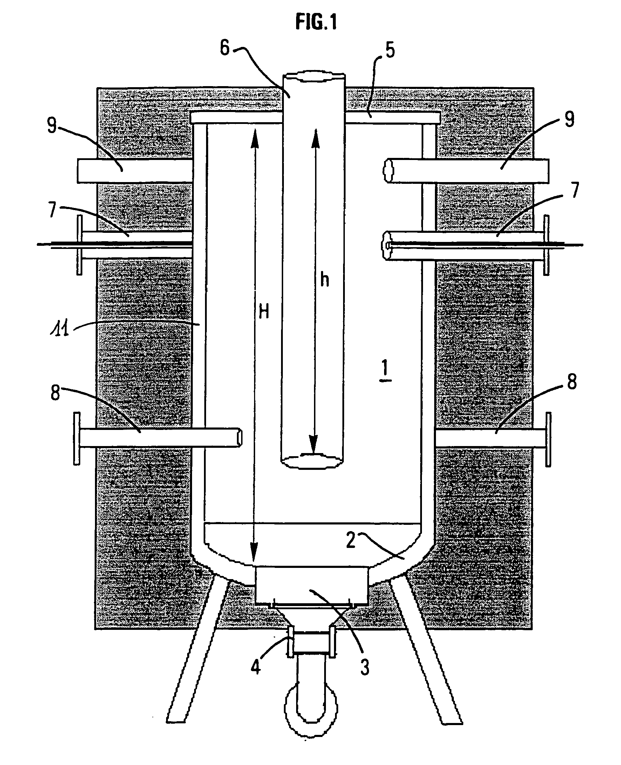

Sur la figure 1 apparaissent, de façon schématisée, les principaux éléments de l'invention. Le dispositif d'auto-combustion comprend une chambre de combustion 1 disposée de préférence verticalement. La chambre est cylindrique et comprend un fond, ou une base, de forme concave équipé d'un système de trémie 3 pour recueillir les solides brûlés et les évacuer par un sas 4. La chambre cylindrique est obturée à son extrémité supérieure par une plaque 5 comprenant sensiblement dans son axe un conduit 6 faisant office de cheminée.

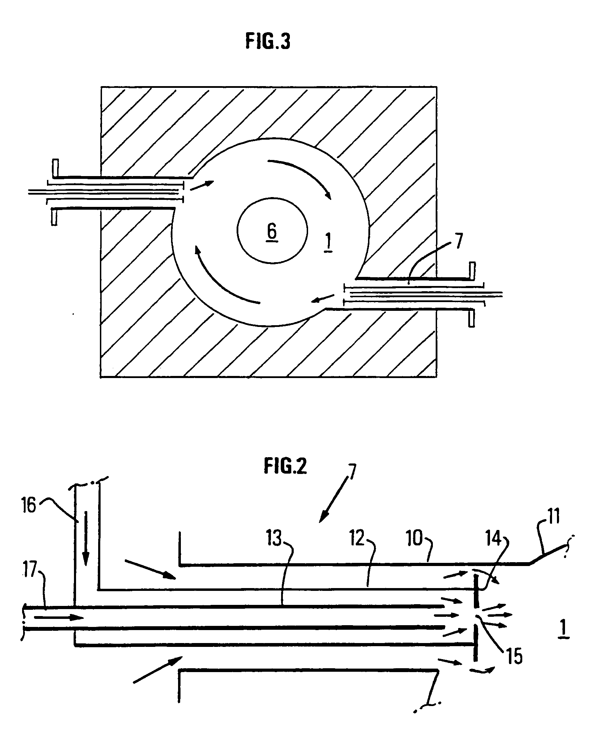

Le combustible est injecté dans la chambre 1 par au moins un moyen d'injection 7 disposé sensiblement tangentiellement à la chambre, de façon que le combustible soit soumis à un mouvement circulaire dans l'espace annulaire ménagé par l'extérieur de la cheminée 6 et l'intérieur de la chambre 1. Les détails du système d'injection 7 seront décrits à partir de la figure 2.

La chambre comporte d'autres moyens d'injection d'air 8, par exemple situés en dessous des injections de combustible. Ces injections d'air secondaire sont disposées sensiblement tangentiellement à la chambre, mais orientés de façon telle que l'air est animé d'un mouvement de rotation en sens inverse de celui du combustible injecté par les moyens 7.

D'autres entrées 9, disposées généralement au-dessus et dans le voisinage des injections de combustibles, permettent le préchauffage de la chambre de combustion, soit par une introduction directe de gaz chauds provenant d'un générateur extérieur, soit par un ou plusieurs brûleurs de préchauffage disposés aux entrées 9. Ces entrées peuvent être tangentielles ou non à la chambre. La fonction principale de ces moyens de préchauffage est d'initier l'auto combustion du combustible injecté.

La hauteur de la chambre est H, la longueur de la cheminée à l'intérieur de la chambre est h.

La figure 2 montre plus en détail les moyens d'injection 7 de combustible.

Le combustible peut être gazeux, liquides ou solides contenant ou non des cendres fatales, ou un mélange des trois phases. Le combustible peut être du type de celui décrit dans la demande FR-98/12751, citée ici en référence. Le combustible est sous forme d'une émulsion pouvant être facilement transportée, et pulvérisée par de l'air sous pression pour obtenir des gouttelettes ou/et des particules solides de diamètre maximum inférieur à 10 mm et de préférence inférieure à 5 mm, et une présence simultanée d'une quantité suffisante de fines particules ou gouttelettes, par exemple ayant un diamètre inférieur ou égal à 25 µm. Une quantité supérieure à environ 2% généralement suffit pour créer l'auto inflammation.

La figure 2 montre les moyens d'injection 7 comportant un tube 10 assemblé sur la paroi 11 de la chambre de combustion 1. A l'intérieur de ce tube 10, deux autres tubes 12 et 13 sont placés sensiblement selon le même axe. Le tube 12 se termine, coté chambre de combustion, par un disque ou rondelle 14 ayant un orifice 15 à travers lequel sort le jet pulvérisé de combustible. Le tube intérieur 13 débouche à proximité de l'orifice 15, à une distance optimale pour qu'il y ait pulvérisation et mélange efficace entre l'émulsion combustible injectée par l'intermédiaire de l'annulaire entre les tubes13 et 12 et le fluide sous pression (air) injecté par le tube 13. La conduite 17 est reliée à un compresseur pneumatique, la conduite 16 est reliée aux moyens de pompage du combustible. Entre le tube 12 et 10 circule de l'air primaire qui est injecté séparément du combustible de façon à réguler la combustion du mélange dans la chambre 1.

Le disque 14 permet de créer suffisamment de turbulences au niveau de l'injection de combustible pour favoriser un excellent mélange air/combustible.

La figure 3 montre une coupe transversale de la chambre au niveau d'un couple d'injecteurs 7. Les flèches représentent schématiquement le trajet des gaz et/ou particules enflammés dans la chambre 1.

Le mouvement hélicoïdal procure au combustible un phénomène de centrifugation permettant aux particules (solides ou liquides) les plus lourdes de se diriger vers les parois de la chambre. Le temps de transit de ces particules est ainsi augmenté par ce phénomène de centrifugation, et peut être aussi quelque peu augmenté par une injection d'air secondaire à contre-courant. Le temps de transit des particules les plus lourdes peut atteindre quelques minutes, ce qui permet une combustion totale et une extraction efficace des matières volatiles tardives.

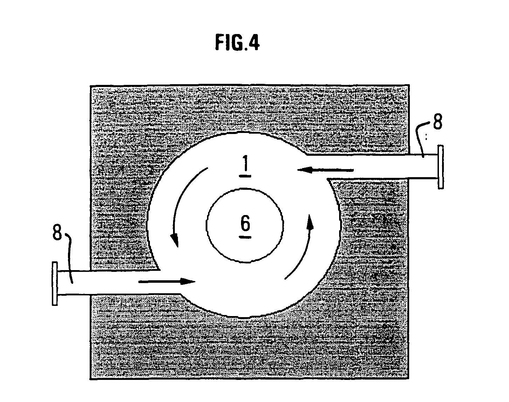

La figure 4 montre la disposition des entrées d'air secondaire par rapport aux entrées d'air primaire et des moyens d'injection 7. Le sens de rotation de l'air est ici en sens contraire des aiguilles d'une montre, alors que les gaz et/ou particules enflammées qui descendent dans un mouvement sensiblement hélicoïdal dans la chambre dans le sens des aiguilles d'une montre. Une telle disposition permet notamment de bloquer partiellement le mouvement hélicoïdal avec forte production de turbulences qui génère un mélange rapide entre l'air secondaire et les fumées chaudes et favorise les transferts de masse et de chaleur par fluidisation des cendres.

Les effluents de combustion sortent par la cheminée 6 axiale, généralement en acier réfractaire. Le rôle de la cheminée est fondamental dans le fonctionnement de l'équipement. Elle génère le flux radiatif nécessaire à l'allumage du combustible, elle réduit le volume de la chambre 1 en créant un espace annulaire où se passe la combustion de manière à maintenir une vitesse élevée et quasiment constante des gaz chauds autour de la cheminée. Par conséquent, le flux convectif est important vers la paroi de la chambre. La longueur h de la cheminée dans la chambre 1 est déterminée relativement à la longueur H de la chambre pour forcer les gaz chauds à atteindre le bas du foyer. Cette zone de rétention joue un rôle fondamental. Elle doit être très chaude, correctement alimentée en oxygène et être capable de retenir les matières solides sur plusieurs minutes pour permettre l'extraction des produits volatils tardifs et l'élimination complète du carbone contenu dans les cendres. La cheminée permet enfin d'évacuer les fumées vers le haut du foyer. Le combustible utilisé générant des cendres fatales, la trémie 3 est prévue pour permettre l'évacuation facile de ces matières minérales.

Le coefficient d'émission radiatif d'une paroi étant par nature plus élevée que celle des gaz, la cheminée permet de transférer au combustible une part non négligeable de l'énergie contenue dans les fumées. La forte teneur en eau du combustible (30 % à 40 %) nécessite un apport d'énergie important au voisinage du point l'injection du combustible. Les effets combinés du rayonnement des parois et des circulations de gaz chauds produites par le disque 14 placé à l'extrémité du tube d'injection 12, permettent de maintenir une flamme bien accrochée en sortie d'injecteur 7.

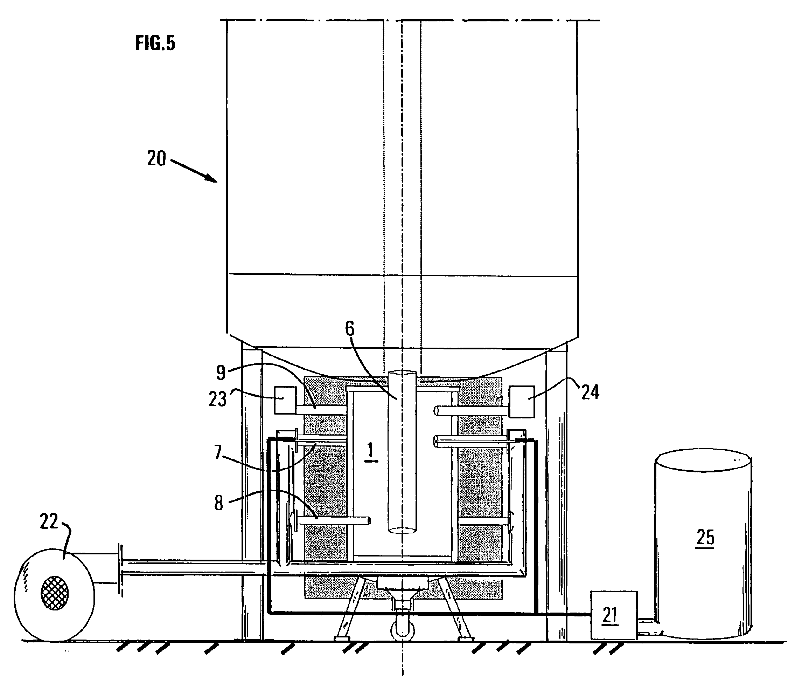

Comme illustré sur la figure 5, la cheminée 6 peut coopérer avec une cuve calorifugée de stockage et de production d'eau chaude 20 traversée selon son axe par la cheminée 6. Un transfert de chaleur est ainsi réalisé, des fumées de combustion vers l'eau contenue dans la cuve. Un ventilateur d'air 22 alimente les entrées d'air primaire et secondaire. Un autre compresseur, non représenté, fournit de l'air à plus haute pression pour la pulvérisation de l'émulsion combustible. Un réservoir 25 contient l'émulsion combustible qui a été préparée par broyage, malaxage de déchets graisseux en présence d'eau et éventuellement d'additifs pour stabiliser l'émulsion. Dans le cas où le pouvoir calorifique des déchets n'est pas suffisant pour un fonctionnement optimal du dispositif selon l'invention, on peut doper l'émulsion avec les hydrocarbures, ou autres matériaux pouvant augmenter le PCI moyen de l'émulsion.

Lorsque le dispositif d'auto-combustion selon l'invention est ainsi couplé avec un ensemble de production d'eau chaude, des capteurs de température (non référencés) sont alors prévus et ils coopèrent avec une commande automatique qui peut agir sur le ventilateur 22, la pompe 21 de combustible, ou les brûleurs 23 et 24, afin d'arrêter ou redémarrer la combustion en fonction de la température de l'eau dans la cuve.

L'automatisation d'un ensemble de production d'eau chaude peut aussi comprendre un élément tel qu'un brûleur à gaz de type brûleur industriel à pré mélange, disposé au bas de la cuve 20, indépendamment de la chambre de combustion 1. Cet élément peut jouer le rôle d'une sécurité en cas d'arrêt de fonctionnement du dispositif d'auto-combustion lui-même, lorsque par exemple le combustible vient à manquer, ou que la capacité calorifique des déchets est inférieure à la puissance énergétique demandée. C'est alors un apport calorifique supplémentaire.

Il est clair que le dispositif ne se limite pas à produire de l'eau chaude, mais que ses applications en tant que générateur de chaleur peuvent être diverses et multiples.

Les nombreuses séries d'essais qui ont été réalisées ont permis de déterminer les éléments indispensables à l'obtention d'une bonne combustion avec des déchets graisseux, ces éléments sont les suivants :
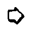 Utilisation d'un combustible facilement transportable entre le stockage et le brûleur et possibilité de le disperser dans un écoulement gazeux sous forme de gouttelettes et des particules solides (diamètre maxi inférieur à 5 mm).
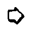 Système de combustion acceptant à la fois des produits liquides, solides et gazeux.
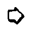 Système de combustion acceptant des particules (ou gouttelettes) solides ou liquides pouvant être quinze (15) fois supérieures aux plus grosses particules habituellement rencontrées en combustion de fuel lourd ou de charbon pulvérisé.
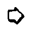 Système de combustion utilisant une assistance à l'air comprimé afin de produire une fraction suffisante de fines gouttelettes (~ 5 à 25 µm) nécessaires au bon accrochage de la flamme.
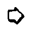 Système de combustion permettant de réaliser un bon mélange entre le combustible vaporisé et l'air afin d'éviter la formation de coke.
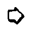 Système de combustion avec alimentation continue du produit.
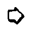 Système de combustion à grande inertie thermique pour accepter des variations importantes de la taille des gouttes (ou des matières solides) injectées.
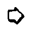 Système de combustion assurant à la fois une rétention suffisante (sur plusieurs minutes) des produits les plus difficiles à brûler (produits solides et volatils tardifs) et une bonne alimentation de cette zone de rétention par un flux de gaz chauds et suffisamment riche en oxygène (typiquement 1000°C et 9% de O2).
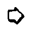 Système de combustion permettant une bonne évacuation des cendres et présentant une bonne résistance à la corrosion des fumées.
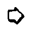 Système de combustion assurant un temps de séjour des fumées supérieur ou égal à deux (2) secondes.

## Revendications

1. Dispositif d'auto-combustion d'un combustible comportant des matériaux organiques, végétaux ou minéraux, ledit dispositif comportant en combinaison :
- une chambre de combustion (1),
- au moins un moyen d'injection du combustible (7),
- des moyens de préchauffage (9) de la chambre disposés dans le voisinage du moyen d'injection (7) du combustible,
- au moins une admission d'air,
- des moyens d'évacuation (6) des fumées chaudes, ladite chambre comprenant une enveloppe cylindrique (11), lesdits moyens d'évacuation comprenant un conduit (6) ayant le même axe que celui de la chambre et disposé à l'intérieur de ladite chambre, le moyen d'injection de combustible est disposé sensiblement tangentiellement à ladite enveloppe cylindrique de façon que le combustible soit animé dans l'espace annulaire d'un mouvement circulaire autour dudit conduit, l'injection de combustible est placée de façon éloignée de l'orifice d'extrémité du conduit d'évacuation (6), et **caractérisé en ce que** la chambre comprend au moins une entrée (8) d'air secondaire qui débouche proche et au dessus de l'orifice d'extrémité du conduit d'évacuation.

2. Dispositif selon la revendication 1, dans lequel deux moyens d'injection de combustible sont disposés diamétralement opposés.

3. Dispositif selon l'une des revendications précédentes, dans lequel le moyen d'injection comprend trois tubes concentriques (10, 12, 13) pour l'injection du combustible, de l'air de pulvérisation dudit combustible, et de l'air pour la combustion.

4. Dispositif selon la revendication 3, dans lequel le moyen de d'injection comprend une buse de pulvérisation constituée d'un disque (14) percé d'un orifice (15) pour le passage du jet de combustible pulvérisé, la forme du disque étant telle qu'elle crée des turbulences pour favoriser le mélange air/combustible dans la chambre.

5. Dispositif selon la revendication 1, dans lequel ladite entrée d'air est sensiblement tangentielle à ladite enveloppe, orientée de façon que le mouvement de l'air secondaire dans la chambre soit dans le sens contraire de celui du combustible.

6. Dispositif selon l'une des revendications 1 ou 5, dans lequel il y a deux entrées d'air opposées diamétralement.

7. Dispositif selon la revendication 1, dans lequel lesdits moyens de préchauffage comportent des admissions d'air chaud provenant de brûleurs. '

8. Dispositif selon l'une des revendications précédentes, dans lequel la chambre comporte dans sa partie inférieure des moyens de réception et d'évacuation (3, 4) des résidus ultimes de la combustion.

9. Dispositif selon l'une des revendications précédentes, dans lequel le conduit d'évacuation coopère avec un échangeur de chaleur (20), par exemple pour fournir de l'eau chaude ou de la vapeur.

10. Dispositif selon l'une des revendications précédentes, dans lequel un ventilateur (22) fournit l'air de combustion, un compresseur fournit l'air de pulvérisation, une pompe (21) alimente les moyens d'injection en combustible.

11. Dispositif selon l'une des revendications précédentes, dans lequel le combustible est un mélange d'eau et de matières organiques, végétales, ou minérales broyées en morceaux de taille moyenne inférieure à 10 mm, et de préférence inférieure à 5 mm.

12. Dispositif selon la revendication 11, dans lequel on ajoute au moins un additif pour stabiliser le mélange combustible.

13. Dispositif selon l'une des revendications 11 ou 12, dans lequel on ajoute une quantité d'hydrocarbures pour augmenter le PCI moyen dudit mélange.

14. Dispositif selon l'une des revendications 11 à 13, dans lequel la matière organique provient de déchets graisseux, par exemple de palmipèdes.

15. Méthode pour générer de l'énergie calorifique, **caractérisée en ce qu'**elle met en oeuvre le dispositif selon l'une des revendications précédentes et ce que l'on détermine le volume annulaire de la chambre de combustion pour optimiser la combustion en réglant le temps de transit des gaz chauds.

16. Méthode selon la revendication 15, dans laquelle on ajuste la composition et/ou la pulvérisation du combustible pour avoir une quantité suffisante de fines gouttelettes et/ou particules pour optimiser l'auto inflammation du combustible.

## Claims

1. Device for auto-combustion of a fuel including organic, vegetable or mineral matter, the said device including in combination:
- a combustion chamber (1),
- at least one means for injection of the fuel (7),
- means for preheating (9) of the chamber arranged in the vicinity of the means for injection (7) of the fuel,
- at least one air intake,
- means for evacuation (6) of the hot fumes,
the said chamber comprising a cylindrical casing (11), the said evacuation means comprising a pipe (6) having the same axis as that of the chamber and arranged inside the said chamber, the fuel injection means is arranged substantially tangentially to the said cylindrical casing in such a manner that a circular motion around the said conduit is imparted to the fuel in the annular space, the injection of fuel is positioned distant from the end orifice of the evacuation pipe (6), and **characterised by** the fact that the chamber includes at least one intake (8) for secondary air which emerges close to and above the end orifice of the evacuation pipe.

2. Device as described in claim 1, in which two means for injection of fuel are arranged diametrically opposed.

3. Device as described in one of the preceding claims, in which the injection means comprises three concentric tubes (10, 12, 13) for injection of the fuel, of air for atomizing the said fuel, and of combustion air.

4. Device as described in claim 3, in which the injection means comprises an atomization nozzle formed by a disc (14) drilled with an orifice (15) for passage of the atomized fuel jet, the form of the disc being such that it creates turbulences to favour air/fuel mixture in the chamber.

5. Device as described in claim 1, in which the said air intake is substantially tangential to the said casing, orientated in such a manner that the motion of the secondary air in the chamber is in the opposite direction to that of the fuel.

6. Device as described in one of claims 1 or 5, in which there are two diametrically opposed air intakes.

7. Device as described in claim 1, in which the said preheating means include intakes of hot air from burners.

8. Device as described in one of the preceding claims, in which the chamber includes in its lower part means for reception and evacuation (3, 4) of the final combustion residues.

9. Device as described in one of the preceding claims, in which the evacuation pipe co-operates with a heat-exchanger (20), for example to provide hot water or steam.

10. Device as described in one of the preceding claims, in which a fan (22) provides the combustion air, a compressor provides the atomization air, and a pump (21) provides the injection means with fuel.

11. Device as described in one of the preceding claims, in which the fuel is a mixture of water and organic, vegetable or mineral matter crushed into pieces of mean size smaller than 10 mm, and preferably smaller than 5 mm.

12. Device as described in claim 11, in which at least one additive is added to stabilize the combustible mixture.

13. Device as described in one of claims 11 or 12, in which a quantity of hydrocarbons is added to increase the mean NCV of the said mixture.

14. Device as described in one of claims 11 to 13, in which the organic matter comes from oily waste, for example from palmipeds.

15. Method for generating calorific energy, **characterised by** the fact that it employs the device as described in one of the preceding claims and by the fact that the annular volume of the combustion chamber is determined to optimize combustion by adjusting the transit time of the hot gases.

16. Method as described in claim 15, in which the composition and/or atomization of the fuel is adjusted to have a sufficient quantity of fine droplets and/or particles to optimize self-ignition of the fuel.

## Patentansprüche

1. Selbstverbrennungsvorrichtung eines Brennstoffs, der organische, pflanzliche oder mineralische Stoffe enthält, wobei die Vorrichtung kombiniert Folgendes umfasst:
- eine Brennkammer (1),
- mindestens ein Einspritzmittel (7) des Brennstoffs,
- Vorwärmmittel (9) der Brennkammer, die in der Nähe des Einspritzmittels (7) des Brennstoffs angeordnet sind,
- mindestens einen Lufteinlass,
- Ableitungsmittel (6) der heißen Rauchgase,
wobei die Brennkammer einen zylindrischen Mantel (11) aufweist, wobei die Ableitungsmittel eine Leitung (6) aufweisen, die die gleiche Achse hat wie die der Brennkammer und im Inneren der Brennkammer angeordnet ist, wobei das Brennstoffeinspritzmittel im Wesentlichen tangenzial zu dem zylindrischen Mantel so angeordnet ist, dass der Brennstoff im ringförmigen Raum eine kreisförmige Bewegung um die Leitung erhält, wobei die Brennstoffeinspritzung von der Endöffnung der Ableitung (6) entfernt angeordnet ist, und **dadurch gekennzeichnet, dass** die Brennkammer mindestens einen Sekundärlufteingang (8) aufweist, der in der Nähe und über der Endöffnung der Ableitung mündet.

2. Vorrichtung nach Anspruch 1, bei der zwei Brennstoffeinspritzmittel einander diametral entgegengesetzt angeordnet sind.

3. Vorrichtung nach einem der vorhergehenden Ansprüche, bei der das Brennstoffeinspritzmittel drei konzentrische Rohre (10, 12, 13) zum Einspritzen des Brennstoffs, von Zerstäubungsluft des Brennstoffs und Luft für die Verbrennung aufweist.

4. Vorrichtung nach Anspruch 3, bei der das Brennstoffeinspritzmittel eine Sprühdüse aufweist, die aus einer Scheibe (14) besteht, die mit einer Öffnung (15) für das Durchgehen des zerstäubten Brennstoffstrahls durchbohrt ist, wobei die Form der Scheibe derart ist, dass sie Turbulenzen schafft, um das Mischen Luft/Brennstoff in der Brennkammer zu begünstigen.

5. Vorrichtung nach Anspruch 1, bei der der Lufteingang im Wesentlichen tangential zu dem Mantel ist, derart ausgerichtet, dass die Bewegung der Sekundärluft in der Brennkammer in die entgegengesetzte Richtung zu der des Brennstoffs läuft.

6. Vorrichtung nach einem der Ansprüche 1 oder 5, bei der es zwei einander diametral entgegengesetzte Lufteingänge gibt.

7. Vorrichtung nach Anspruch 1, bei der die Vorwärmmittel Einlässe warmer Luft, die von Brennern kommt, aufweist.

8. Vorrichtung nach einem der vorhergehenden Ansprüche, bei der die Brennkammer in ihrem unteren Teil Mittel zum Empfangen und Ableiten (3, 4) der letzten Reste der Verbrennung aufweist.

9. Vorrichtung nach einem der vorhergehenden Ansprüche, bei der die Ableitung mit einem Wärmeaustauscher (20) zusammenarbeitet, um zum Beispiel Warmwasser oder Dampf zu liefern.

10. Vorrichtung nach einem der vorhergehenden Ansprüche, bei der ein Gebläse (22) Verbrennungsluft liefert, ein Kompressor Zersträubungsluft liefert, eine Pumpe (21), die Brennstoffeinspritzmittel versorgt.

11. Vorrichtung nach einem der vorhergehenden Ansprüche, bei der der Brennstoff ein Gemisch aus Wasser und organischen, pflanzlichen oder mineralischen Stoffen ist, die in Stücke mit einer mittleren Größe kleiner als 10 mm und vorzugsweise kleiner als 5 mm zerkleinert sind.

12. Vorrichtung nach Anspruch 11, bei der man mindestens einen Zusatzstoff hinzufügt, um das Brennstoffgemisch zu stabilisieren.

13. Vorrichtung nach einem der Ansprüche 11 oder 12, bei der man eine Kohlenwasserstoffmenge hinzufügt, um den mittleren unteren Heizwerts des Gemischs zu steigern.

14. Vorrichtung nach einem der Ansprüche 11 bis 13, bei der der organische Stoff aus fettem Abfall, zum Beispiel von Wasservögeln stammt.

15. Verfahren zum Verwalten von Wärmeenergie, **dadurch gekennzeichnet, dass** es eine Vorrichtung gemäß einem der vorhergehenden Ansprüche umsetzt, und dass man das Ringvolumen der Brennkammer bestimmt, um die Verbrennung zu optimieren, indem man die Durchgangszeit der heißen Rauchgase einstellt.

16. Verfahren nach Anspruch 15, bei dem man die Zusammensetzung und/oder das Zerstäuben des Brennstoffs anpasst, um eine ausreichende Menge feiner Tröpfchen und/oder Partikel zu haben, um das Selbstentzünden des Brennstoffs zu optimieren.
